# EUROPEAN PATENT APPLICATION

(11) **EP 4 787 543 A1**
(43) Date of publication of application: **05.08.2026**
(21) Application number: 24870456.1
(22) Date of filing: 12.09.2024
(51) Int. Cl.: H01M 10/613, H01M 10/6556, H01M 10/6569, H01M 10/659

(54) **HEAT DISSIPATION ASSEMBLY, BATTERY PACK AND ELECTRIC DEVICE**

(30) Priority: 28.09.2023 CN 202322669212 U
(71) Applicant: BYD Company Limited, Shenzhen, Guangdong 518118 (CN)
(72) Inventor: GUO, Jinxin, Shenzhen, Guangdong 518118 (CN); LEI, Song, Shenzhen, Guangdong 518118 (CN); GUO, Jiawei, Shenzhen, Guangdong 518118 (CN); LI, Jiaqi, Shenzhen, Guangdong 518118 (CN); WANG, Qiao, Shenzhen, Guangdong 518118 (CN)
(74) Representative: Mathys & Squire
(86) International application number: PCT/CN2024/118464
(87) International publication number: WO 2025/066912

(57) **Abstract**

An electric device. The electric device comprises a battery pack; the battery pack comprises a heat dissipation assembly; the heat dissipation assembly comprises an outer package, a phase change medium and supporting members; the outer package is suitable for being attached to two adjacent battery cells in the battery pack; the supporting members are arranged in the outer package and define channels together with the outer package; the phase change medium is located in the channels; the outer package is provided with outlets; and the outlets are in communication with the channels.

## Description

### CROSS-REFERENCE TO RELATED APPLICATIONS

The present application claims priority from a Chinese patent application submitted to China National Intellectual Property Administration on September 28, 2023, with the application number 202322669212.6 and the title "HEAT DISSIPATION ASSEMBLY, BATTERY PACK AND ELECTRIC DEVICE", the entire content of which is incorporated herein by reference.

### FIELD

The present application relates to the field of battery technology, particularly to a heat dissipation assembly, a battery pack and an electric device.

### BACKGROUND

Batteries, due to their excellent performance, have shown promising application prospects in fields such as new energy vehicles and energy storage base stations. With increasingly higher demands on electric vehicle range and corresponding charging rates and durations in recent years, phase change materials are currently primarily used to address the issue of excessive temperatures during fast charging. The core principle involves utilizing latent heat of phase change to dissipate the substantial heat generated during rapid charging of battery cells.

In the related art, when the material undergoes a phase transition from liquid to gas, its volume expands several times. The generation of a large amount of gas causes a sharp increase in internal flow pressure within the phase change material. The significant internal pressure can rapidly rupture the package of the phase change material, leading to substantial leakage and adversely affecting the battery's heat dissipation performance.

### SUMMARY

This application aims to solve at least one of the technical issues existing in the prior art. To this end, one objective of this application is to provide a heat dissipation assembly that can improve the utilization rate of phase change medium.

Another objective of this application is to provide a battery pack.

Another objective of this application is to provide an electric device.

The heat dissipation assembly according to the embodiment of this application includes: an outer package, the outer package being suitable for being in contact with two adjacent battery cells in a battery pack; a phase change medium; and a supporting member, the supporting member being arranged in the outer package and defining a channel together with the outer package, the phase change medium being disposed in the channel, an outlet being arranged on the outer package, and the outlet being in communication with the channel.

Thus, by arranging the supporting member and the outer package in the heat dissipation assembly to jointly define a plurality of channels in communication with each other, when the battery cell undergoes thermal runaway, the phase change medium can flow along the channels, thereby increasing the flow resistance of the phase change medium in the channels and prolonging the heat absorption time of the phase change medium in the channels. This can prevent the rapid and large loss of phase change medium after absorbing heat generated by the battery cell, thus improving the utilization rate of the phase change medium. This is beneficial for enhancing the heat dissipation effect of the battery pack and ensuring the operational reliability of the battery pack.

In some embodiments of this application, the channel includes a plurality of sub-channels, and a channel outlet of one sub-channel of the two adjacent sub-channels is in communication with a channel inlet of the other sub-channel.

In some embodiments of this application, one of the two adjacent sub-channels is arranged to surround the outer periphery of the other.

In some embodiments of this application, a plurality of the supporting members are provided, each of the supporting members is a frame-shaped member, and the plurality of supporting members are arranged in a surrounding configuration in sequence.

In some embodiments of this application, the two adjacent supporting members are respectively a first supporting member and a second supporting member, a first notch is arranged on the first supporting member, a second notch is arranged on the second supporting member, the first notch is disposed on one side of the first supporting member along a first direction, the second notch is disposed on a side of the second supporting member away from the first notch along the first direction, and the notch of the supporting member on an outermost ring is disposed on a side of the supporting member away from the outlet along the first direction, the first direction is the length or width direction of the heat dissipation assembly.

In some embodiments of this application, the supporting member is in a continuous spiral shape.

In some embodiments of this application, the supporting member includes a plurality of plate segments spaced apart from each other in a first direction, the plurality of plate segments extend in a second direction, and the two adjacent plate segments are respectively a first plate segment and a second plate segment, an orthographic projection of the first plate segment in the first direction partially overlaps or does not overlap with an orthographic projection of the second plate segment in the first direction, wherein the first direction is the length direction of the heat dissipation assembly, and the second direction is the width direction of the heat dissipation assembly, or the first direction is the width direction of the heat dissipation assembly, and the second direction is the length direction of the heat dissipation assembly.

In some embodiments of this application, the two adjacent sub-channels are respectively a first sub-channel and a second sub-channel, the first sub-channel has a plurality of channel outlets, and the second sub-channel has a plurality of channel inlets, the plurality of channel outlets of the first sub-channel and the plurality of channel inlets of the second sub-channel correspond one-to-one and communicate with each other.

In some embodiments of this application, the supporting member (23) includes: a plurality of main supporting members, the main supporting members including a first main body portion and a first extension portion, two first extension portions are provided at two ends of the first main body portion along an extension direction of the first main body portion to form an opening; wherein the two adjacent main supporting members are respectively a third supporting member and a fourth supporting member, the fourth supporting member is arranged to surround the outside of the third supporting member, and the opening of the third supporting member is arranged opposite to the first main body portion of the fourth supporting member.

In some embodiments of this application, the supporting member further includes: a secondary supporting member, the secondary supporting member being disposed at the opening of the main supporting member on the innermost ring to divide the opening into a plurality of sub-openings, the sub-opening being the channel outlet of the sub-channel.

In some embodiments of this application, the outer package includes a first package layer and a second package layer, the first package layer and the second package layer are respectively arranged on both sides of the phase change medium along a third direction, the first package layer and the second package layer are respectively configured to be in contact with two adjacent cells in the battery pack, both sides of supporting member along a third direction are respectively connected to the first package layer and the second package layer, and the supporting member respectively defines the channel with the first package layer and the second package layer, the third direction is the thickness direction of the heat dissipation assembly.

In some embodiments of this application, the peripheral edge of the outer package is at least partially formed with a package area, and the package area is at least partially thinned to form the outlet.

In some embodiments of this application, an exhaust channel is arranged between the two adjacent battery cells, the outlet is disposed on at least one side of the outer package along a first direction, the exhaust channel is disposed outside the heat dissipation assembly corresponding to one side of the outlet and is in communication with the outlet.

In some embodiments of this application, the length of the heat dissipation assembly in a first direction is less than or equal to the length of the battery cell in a first direction, the length of the exhaust channel in a first direction is L1, and the length of the battery cell in a first direction is L2, L1 and L2 satisfy the relationship equation: 1/100L2≤L1≤3/100L2, 1mm≤L1≤3mm.

In some embodiments of this application, L1 satisfies the relationship equation: 1mm≤L1≤3mm.

The battery pack according to this application includes: the aforementioned heat dissipation assembly; and battery cells, the battery cells being arranged to extend in a second direction and there being a plurality, the plurality of battery cells being spaced apart in a third direction, and the heat dissipation assembly being arranged between the two adjacent battery cells along a third direction.

In some embodiments of this application, the battery pack includes the plurality of heat dissipation assemblies, and the plurality of heat dissipation assemblies between the two adjacent battery cells along a third direction are arranged in the second direction; and/or, the plurality of heat dissipation assemblies between the two adjacent battery cells along a third direction are arranged in the first direction, wherein the first direction and the second direction are perpendicular to each other.

In some embodiments of this application, at least one battery cell is disposed between the two adjacent heat dissipation assemblies.

The electric device according to this application includes: the aforementioned battery pack.

The additional aspects and advantages of the present application will be partly presented in the following description, and partly will become apparent from the description below, or can be learned through practice of the present application.

### BRIEF DESCRIPTION OF THE DRAWINGS

The above and/or additional aspects and advantages of the present application will become apparent and easily understandable from the description of the embodiments in conjunction with the accompanying drawings, wherein:
FIG. 1 is a partial exploded view of a battery pack according to an embodiment of the present application.
FIG. 2 is a partial schematic diagram of a battery pack according to an embodiment of the present application.
FIG. 3 is an exploded view of a heat dissipation assembly according to an embodiment of the present application.
FIG. 4 is an exploded view of a heat dissipation assembly according to other embodiments of the present application.
FIG. 5 is an exploded view of a heat dissipation assembly according to some embodiments of the present application.
FIG. 6 is an exploded view of a heat dissipation assembly according to some embodiments of the present application.
FIG. 7 is a partial schematic diagram of a battery pack according to an embodiment of the present application.
FIG. 8 is a schematic block diagram of an electric device according to an embodiment of the present application.

Reference numerals:
electric device 1000, battery pack 100,
battery cell 10,
heat dissipation assembly 20,
outer package 21, outlet 211, first package layer 212, second package layer 213, package area 214,
phase change medium 22, heat dissipation area 222
supporting member 23, first notch 2311, second notch 2312, first supporting member 232, second supporting member 233, plate segment 235, first plate segment 2351, second plate segment 2352, third plate segment 2353, fourth plate segment 2354, main supporting member 236, first main body portion 2361, first extension portion 2362, third supporting member 2363, fourth supporting member 2364, secondary supporting member 237, second main body portion 2371, second extension portion 2372,
channel 24, sub-channel 241, first sub-channel 2411, second sub-channel 2412, third sub-channel 2413, fourth sub-channel 2414, channel outlet 242, channel inlet 243,
opening 25, sub-opening 251,
exhaust channel 30.

### DETAILED DESCRIPTION

The embodiments of the present application are described in detail below. The embodiments described with reference to the accompanying drawings are exemplary.

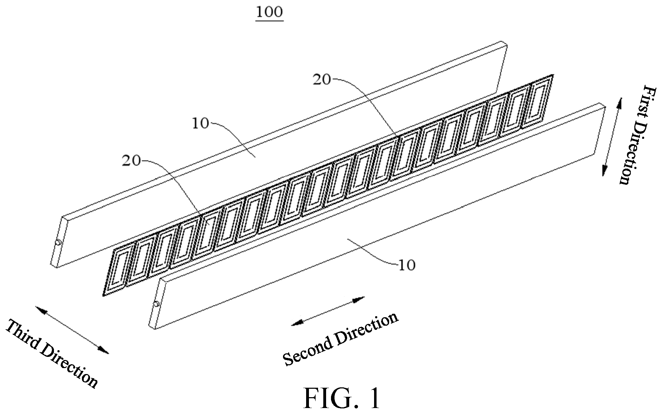

With reference to FIGs. 1 to 7, the heat dissipation assembly 20 of the battery pack 100 according to an embodiment of the present application is described in below. The heat dissipation assembly 20 of the battery pack 100 can be applied to the battery pack 100, which can be used in electric device. In the embodiment of the present application, a first direction is one of the length and width directions of the heat dissipation assembly 20, a second direction is the other of the length and width directions of the heat dissipation assembly 20, the first direction is perpendicular to the second direction, and a third direction is the thickness direction of the heat dissipation assembly 20.

As shown in FIGs. 1 to 7, the heat dissipation assembly 20 of the battery pack 100 according to the present application may mainly include: an outer package 21, a phase change medium 22, and a supporting member 23. The outer package 21 is suitable for being in contact with two adjacent battery cells 10 in a battery pack 100, so as to arrange the heat dissipation assembly 20 between the two adjacent battery cells 10 in the battery pack 100. By being in contact with battery cells 10, the heat generated by the battery cells 10 can be absorbed and conducted away, which can help the battery dissipate heat quickly and ensure the operational reliability of the cells 10 within the battery pack 100.

Furthermore, in the embodiment of the present application, the phase change medium 22 is a phase change material that can change from a liquid phase to a gas phase after absorbing the heat generated by the battery cell 10. Due to the local differences in the amount of heat generated by the battery cell 10 inside the battery pack 100 during fast charging, the phase change medium 22 in the heat dissipation assembly 20 exists in a state where both gas and liquid phases coexist. Some of the phase change medium 22 absorbs too much heat and vaporizes, causing the volume of this part of the phase change medium 22 to increase, which can promote the flow of liquid-phase phase change medium 22 in the heat dissipation assembly 20.

Furthermore, the supporting member 23 is arranged in the outer package 21 and defines a channel 24 together with the outer package 21, the phase change medium 22 is disposed in the channel 24, an outlet 211 is arranged on the outer package 21, and the outlet 211 is in communication with the channel 24. Specifically, the supporting member 23 is arranged in the outer package 21. On one hand, it can provide support for the outer package 21, preventing the outer package 21 from collapsing due to uncontrolled thermal expansion of the battery cell 10, and enhancing the structural strength of the heat dissipation assembly 20. On the other hand, it allows the supporting member 23 and the outer package 21 to jointly define a channel 24 within the heat dissipation assembly 20.

In this way, when the phase change medium 22 is disposed in the channel 24, it can make the endothermic and expanding phase change medium 22 flow in the direction of the channel 24, increasing the flow resistance of the phase change medium 22 within the heat dissipation assembly 20. This can prevent the vaporized phase change medium 22 from directly pushing the liquid-phase phase change medium 22 out of the heat dissipation assembly 20 and thereby avoiding a large and rapid loss of the phase change medium 22 that has not yet absorbed heat in time. This can extend the time that more liquid-phase phase change medium 22 remains within the channel 24, increase the heat absorption capacity of the phase change medium 22, and thus improve the utilization rate of the phase change medium 22 and enhance the heat dissipation effect of the heat dissipation assembly 20 on the battery pack 100. This can improve the operational reliability of the battery cell 10 in the battery pack 100.

Furthermore, an outlet 211 is arranged on the outer package 21, and the outlet 211 is in communication with the channel 24. In this way, when the vaporization volume of the phase change medium 22 is too large, the phase change medium 22 can flow towards the outlet 211 along the direction of the channel 24. When the gas pressure inside the outer package 21 is high enough, it can break through the outlet 211, allowing a large amount of phase change medium 22 to quickly flow out from the outlet 211, thus achieving rapid heat dissipation of the battery pack 100.

In the embodiment of this application, the outer package 21 is in contact with the large surface of the battery cell 10 (i.e., the surface with the largest area among the plurality of surfaces of the battery cell 10). The large surface of the battery cell 10 is disposed on opposite sides in a third direction of the battery cell 10, and the area of the opposite sides in the third direction of the battery cell 10 is the larger one among all the surfaces of the battery cell 10. Attaching the large surface of the battery cell 10 to the outer package 21 can improve the heat transfer efficiency between the battery cell 10 and the heat dissipation assembly 20. This way, when the battery cell 10 generates heat, the heat can be quickly transferred to the heat dissipation assembly 20 through the large surface of the battery cell 10, which is beneficial to improving the heat dissipation efficiency of the heat dissipation assembly 20, thereby improving the heat dissipation effect of the battery pack 100 and improving the working reliability of the battery pack 100. In other embodiments of this application, the outer package 21 is in contact with other surfaces of the battery cell 10, and the specific design can be tailored according to actual requirements.

Thus, by arranging the supporting member 23 and the outer package 21 in the heat dissipation assembly 20 to jointly define a plurality of channels 24 in communication with each other, when the battery cell 10 undergoes thermal runaway, the phase change medium 22 can flow along the channels 24, thereby increasing the flow resistance of the phase change medium 22 in the channels 24 and prolonging the heat absorption time of the phase change medium 22 in the channels 24. This can prevent the rapid and large loss of phase change medium 22 after absorbing heat generated by the battery cell 10, thus improving the utilization rate of the phase change medium, and facilitating improving the heat dissipation reliability of the battery pack 100.

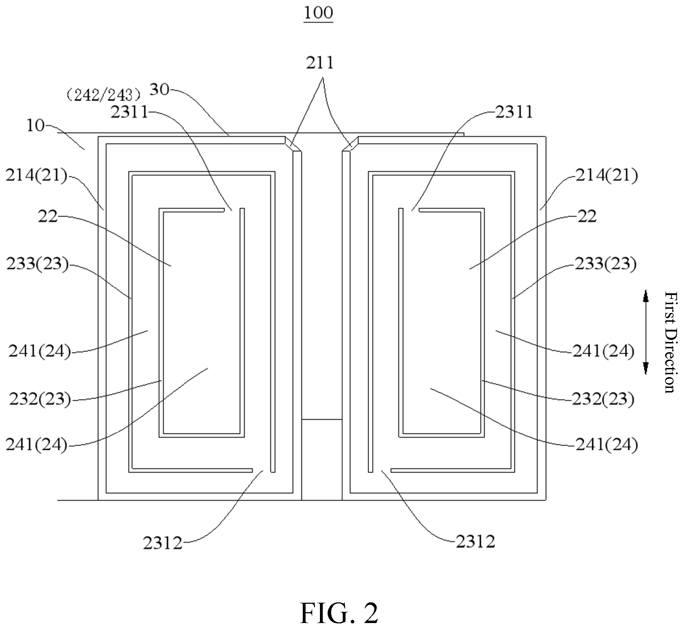

As shown in FIGs. 2 to 7, the channel 24 includes a plurality of sub-channels 241, and a channel outlet 242 of one of the two adjacent sub-channels 241 is in communication with a channel inlet 243 of the other. Specifically, a plurality of sub-channels 241 are arranged in the heat dissipation assembly 20, and the plurality of sub-channels 241 are in communication with each other, allowing the phase change medium 22 to flow smoothly between the plurality of sub-channels 241. This enables the remaining liquid-phase phase change medium 22 to flow smoothly within the channel 24 after the phase change medium 22 vaporizes and expands in volume, thus preventing excessive pressure within the heat dissipation assembly 20 from causing the phase change medium 22 to rush out of the outer package 21 and fail within a certain period of time. The channel outlet 242 of one of the two adjacent sub-channels 241 is in communication with the channel inlet 243 of the other, allowing the phase change medium 22 to flow out from the channel outlet 242 of one sub-channel 241 and directly into the channel inlet 243 of the other sub-channel 241 within the two adjacent sub-channels 241, thus enabling the phase change medium 22 to flow freely within the plurality of sub-channels 241.

As shown in FIG. 2, FIG. 3, FIG. 4 and FIG. 6, one of the two adjacent sub-channels 241 is arranged to surround the outer periphery of the other. This arrangement allows the channel 24 formed by a plurality of sub-channels 241 to surround inside the outer package 21. This increases the distance that the phase change medium 22 flows within the channel 24 and the flow resistance that the phase change medium 22 encounters within the channel 24, which is beneficial for slowing down the flow speed of the phase change medium 22. It also increases the duration for the phase change medium 22 to absorb the heat generated by the battery cell 10, allowing the phase change medium 22 to absorb more heat within the heat dissipation assembly 20. This can improve the utilization rate of the phase change medium 22 and enhance the heat dissipation efficiency of the battery pack 100.

As shown in FIG. 2, FIG. 3, FIG. 4 and FIG. 6, a plurality of supporting members 23 are provided, each of the supporting members 23 is a frame-shaped member, and the plurality of supporting members 23 are arranged in a surrounding configuration in sequence. Specifically, the supporting member 23 arranged inside the outer package 21 is a frame-shaped structure, allowing the plurality of supporting members 23 to be arranged in a surrounding configuration in sequence and forming a plurality of sub-channels 241 in communication with each other, which ensures the structural reliability of the channel 24. In the embodiment of the present application, the material of the supporting member 23 includes but is not limited to plastic.

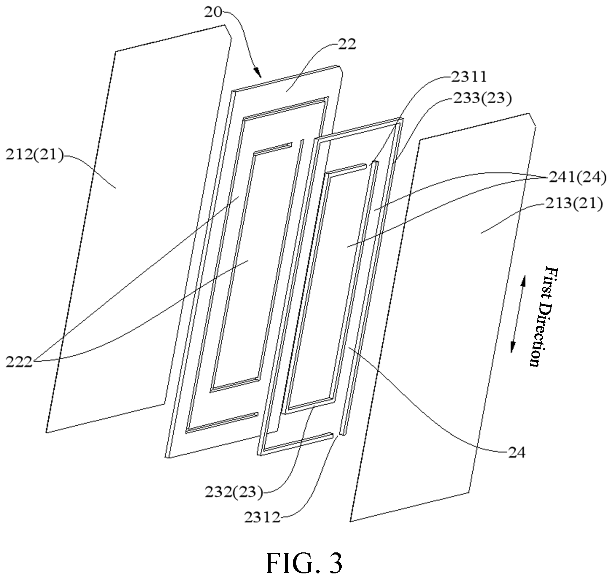

As shown in FIGs. 3 to 6, the supporting member 23 separates the phase change medium 22 into a plurality of heat dissipation areas 222 in communication with each other, the plurality of heat dissipation areas 222 correspond to a plurality of channels 24. Specifically, the supporting member 23 can separate the phase change medium 22 into a plurality of heat dissipation areas 222 in communication with each other, and the plurality of heat dissipation areas 222 correspond to a plurality of channels 24. This not only allows the phase change medium 22 in the plurality of heat dissipation areas 222 to flow smoothly through the channels 24, ensuring the reliability of the channels 24 in guiding the phase change medium 22, but also enables the phase change medium 22 to cover the heat dissipation areas 222, increasing the contact area between the phase change medium 22 and the outer package 21 and the amount of phase change medium 22 in the heat dissipation assembly 20. This allows the phase change medium 22 to quickly absorb the heat from the outer package 21 when the battery cell 10 generates heat, thereby enhancing the heat absorption rate and capacity of the heat dissipation assembly 20, and improving the heat dissipation effect of the heat dissipation assembly 20 on the battery cell 10.

In the embodiments of the present application, an area of the heat dissipation area 222 on the outermost ring accounts for 10% to 20% of a total area of the heat dissipation areas 222 in the heat dissipation assembly 20. If the area of the heat dissipation area 222 on the outermost ring is set to be less than 10% of the total area of the heat dissipation areas 222 in the heat dissipation assembly 20, the supporting member 23 of the outermost ring will be too close to an edge of the outer package 21, making the sealing of the outer package 21 more difficult. if the area of the heat dissipation area 222 on the outermost ring is set to be more than 20% of the total area of the heat dissipation areas 222 in the heat dissipation assembly 20, the amount of phase change medium 22 corresponding to the heat dissipation area 222 on the outermost ring accounts for a higher proportion of the total amount of the phase change medium 22 in the heat dissipation assembly 20. This is because the flow path of the phase change medium 22 in the heat dissipation area 222 on the outermost ring is the shortest and the flow resistance is the lowest. After the phase change medium 22 undergoes a phase change, most of the phase change medium 22 will flow out of the heat dissipation assembly 20, affecting the heat dissipation effect of the heat dissipation assembly 20 on the battery cell 10. Therefore, setting the area of the heat dissipation area 222 on the outermost ring to account for 10% to 20% of the total area of the heat dissipation areas 222 in the heat dissipation assembly 20 not only facilitates the production of the heat dissipation assembly 20, but also ensures the heat dissipation effect of the heat dissipation assembly 20 on the battery cell 10.

According to an embodiment of the present application, as shown in FIG. 2 and FIG. 3, the two adjacent supporting members 23 are respectively a first supporting member 232 and a second supporting member 233, a first notch 2311 is provided on the first supporting member 232, a second notch 2312 is provided on the second supporting member 233, the first notch 2311 is disposed on one side of the first supporting member 232 along a first direction, the second notch 2312 is disposed on a side of the second supporting member 233 away from the first notch 2311 along the first direction, and the notch of the supporting member 23 on the outermost ring is disposed on a side of the supporting member 23 away from the outlet 211 along the first direction.

Specifically, the first notch 2311 on the first supporting member 232 and the second notch 2312 on the second supporting member 233 are arranged to be mutually distant in the first direction. This can extend the distance for the phase change medium 22 to flow from the first notch 2311 to the second notch 2312, increase a flow distance of the phase change medium 22 in the channel 24, and thereby increase a flow duration of the phase change medium 22 in the heat dissipation assembly 20. This allows the phase change medium 22 to absorb more heat generated by the battery cell 10, improving the utilization rate of the phase change medium 22 in the heat dissipation assembly 20. In this embodiment of the present application, while the first notch 2311 and the second notch 2312 are arranged to be mutually distant in the first direction, they can also be arranged to be mutually distant in the second direction. This can further increase the resistance encountered by the phase change medium 22 in the heat dissipation assembly 20, extending the flow duration of the phase change medium 22 in the heat dissipation assembly 20.

Additionally, the notch of the supporting member 23 on the outermost ring is disposed on the side of the supporting member 23 away from the outlet 211 along the first direction. This allows the phase change medium 22 to flow into the sub-channel 241 on the outermost ring, thereby extending the distance that the phase change medium 22 flows from the notch of the supporting member 23 on the outermost ring to the outlet 211. This further increases the resistance encountered by the phase change medium 22 in the heat dissipation assembly 20, prolongs the flow path and duration of the phase change medium 22 within the heat dissipation assembly 20, and not only enhances the heat absorption capacity of the phase change medium 22 in the heat dissipation assembly 20, but also improves the spatial utilization rate of the heat dissipation assembly 20.

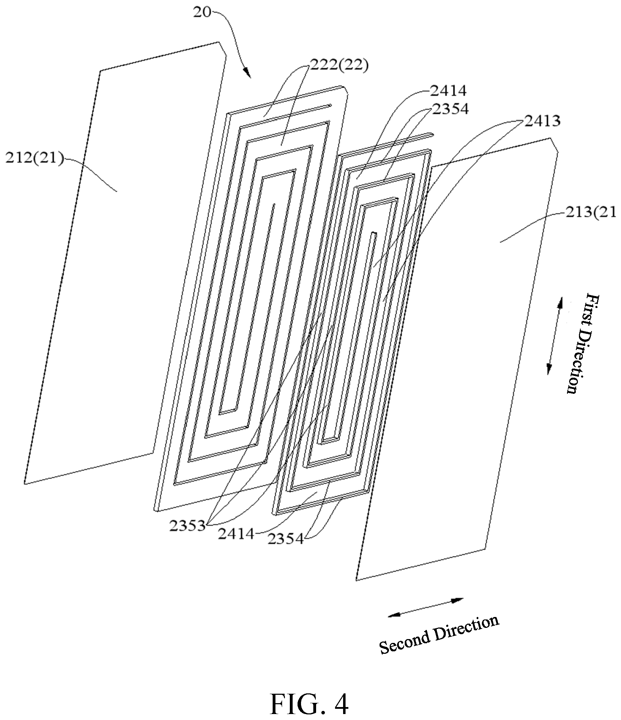

According to another embodiment of the present application, as shown in FIG. 4, the supporting member 23 is in a continuous spiral shape. In the embodiment of the present application, the supporting member 23 includes a plurality of third plate segments 2353 and a plurality of fourth plate segments 2354. The third plate segments 2353 and the fourth plate segments 2354 are alternately connected along the helical direction of the supporting member 23. The plurality of third plate segments 2353 extend in the first direction and are spaced apart along the second direction. The plurality of fourth plate segments 2354 extend in the second direction and are spaced apart in the first direction. At least some of the fourth plate segments 2354 are spaced apart at one end of the plurality of third plate segments 2353 in the first direction, while another part of the fourth plate segments 2354 are spaced apart at the other end of the plurality of third plate segments 2353 in the first direction. Two adjacent third plate segments 2353 and the outer package 21 jointly define a third sub-channel 2413, and two adjacent fourth plate segments 2354 and the outer package 21 jointly define a fourth sub-channel 2414. The third sub-channels 2413 and the fourth sub-channels 2414 are alternately arranged along the helical direction of the supporting member 23 and are sequentially in communication. With such an arrangement, the plurality of third sub-channels 2413 and the plurality of fourth sub-channels 2414 are sequentially in communication, forming the helical channels 24 in the heat dissipation assembly 20.

Furthermore, allowing the phase change medium 22 to flow within the helical channels 24 can increase the flow resistance of the phase change medium 22 in the heat dissipation assembly 20, slow down the flow speed of the heat dissipation assembly 20, and extend the flow time of the unvaporized liquid-phase phase change medium 22 in the outer package 21, so that the unvaporized liquid-phase phase change medium 22 can continue to absorb the heat generated by the battery cell 10, thereby improving the heat absorption rate of the phase change medium 22 and enhancing the heat dissipation effect of the heat dissipation assembly 20 on the battery cell 10.

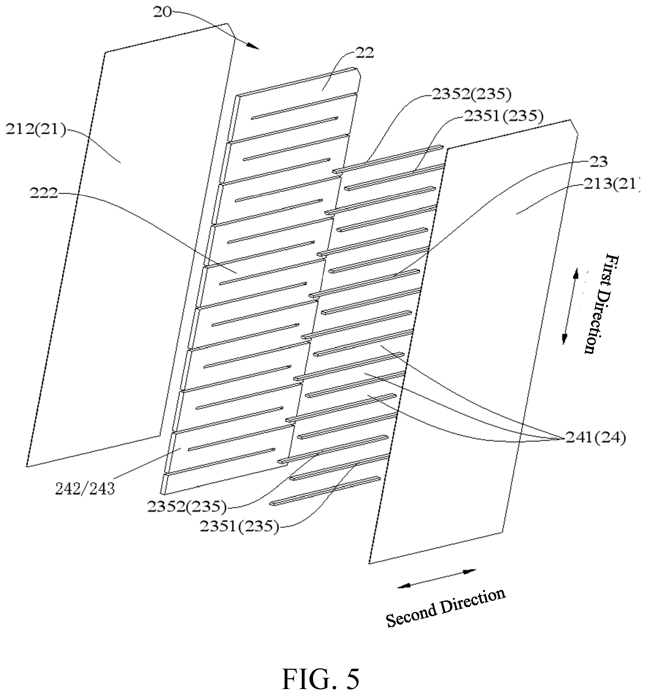

According to other embodiments of the present application, as shown in FIG. 5, the supporting member 23 includes a plurality of plate segments 235 spaced apart from each other in a first direction, the plurality of plate segments 235 all extend in the second direction. This arrangement can define a length of the channel 24 in the second direction, thereby increasing the flow distance of the phase change medium 22 within the outer package 21.The two adjacent plate segments 235 are respectively a first plate segment 2351 and a second plate segment 2352. The first plate segment 2351 and the second plate segment 2352 are spaced apart from each other in the first direction. The first plate segment 2351 and the second plate segment 2352, together with the outer package 21, jointly define sub-channel 241. The plurality of sub-channels 241 extend along the second direction and are spaced apart in the first direction. The first direction is the length direction of the heat dissipation assembly 20, and the second direction is the width direction of the heat dissipation assembly 20, or the first direction is the width direction of the heat dissipation assembly 20, and the second direction is the length direction of the heat dissipation assembly 20.

In some embodiments of the present application, an orthographic projection of the first plate segment 2351 in the first direction partially overlaps with an orthographic projection of the second plate segment 2352 in the first direction. This arrangement allows the channel inlet 243 and channel outlet 242 of the adjacent sub-channels 241 to communicate, and the channel inlet 243 and channel outlet 242 of each sub-channel 241 are spaced apart in the second direction. This not only enables the phase change medium 22 to flow freely within the channel 24, but also extends the flow path of the phase change medium 22 within the heat dissipation assembly 20, increasing the flow resistance of the phase change medium 22 and enhancing utilization rate of the phase change medium 22.

In other embodiments of the present application, an orthographic projection of the first plate segment 2351 in the first direction does not overlap with an orthographic projection of the second plate segment 2352 in the first direction. With this arrangement, on the one hand, the channel inlet 243 and channel outlet 242 of the adjacent sub-channels 241 can be in communication, ensuring smooth flow of the phase change medium 22 within the channel 24. On the other hand, the channel inlet 243 and channel outlet 242 of the adjacent sub-channels 241 can be spaced apart in the first direction, and both the channel inlet 243 and channel outlet 242 are disposed at the middle position of the outer package 21 in the second direction. This not only shortens the length of the plate segment 235, but also prevents the phase change medium 22 from flowing directly from the channel outlet 242 of one sub-channel 241 to the channel inlet 243 of the adjacent sub-channel 241, thereby increasing the flow resistance of the phase change medium 22 within the channel 24 and facilitating the utilization of the phase change medium 22.

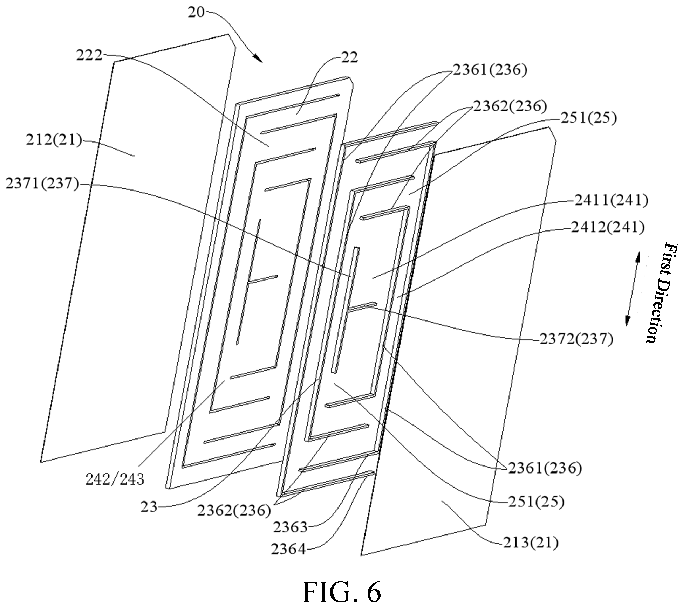

According to another embodiment of the present application, as shown in FIG. 6, the two adjacent sub-channels 241 are respectively a first sub-channel 2411 and a second sub-channel 2412, the first sub-channel 2411 has a plurality of channel outlets 242, and the second sub-channel 2412 has a plurality of channel inlets 243. Specifically, the first sub-channel 2411 has a plurality of channel outlets 242, allowing the phase change medium 22 to flow out from a plurality of directions of the first sub-channel 2411. The second sub-channel 2412 has a plurality of channel inlets 243, allowing the phase change medium 22 to flow in from a plurality of directions of the second sub-channel 2412. The plurality of channel outlets 242 of the first sub-channel 2411 and the plurality of channel inlets 243 of the second sub-channel 2412 correspond one-to-one and communicate with each other, allowing the phase change medium 22 to flow in a plurality of directions simultaneously. This enables the phase change medium 22 to quickly transfer heat to other locations within the heat dissipation assembly 20 after absorbing it, resulting in a more uniform temperature distribution of the phase change medium 22 within the heat dissipation assembly 20. This can slow down the rate of volume increase caused by the vaporization of the phase change medium 22, thereby preventing localized vaporization of the phase change medium 22 in the heat dissipation assembly 20 and accelerating the flow speed of the phase change medium 22 within the channel 24.

Furthermore, as shown in FIG. 6, the supporting member 23 includes a plurality of main supporting members 236, the main supporting members 236 include a first main body portion 2361 and a first extension portion 2362, the first extension portions 2362 are two and respectively arranged at both ends of the first main body portion 2361 along an extension direction of the first main body portion 2361 to form an opening 25. Specifically, by extending the first main body portion 2361 of the main supporting member 236 in the first direction, the phase change medium 22 can be guided along the first direction, increasing the flow distance of the phase change medium 22 in the heat dissipation assembly 20. The two first extension portions 2362 are respectively arranged at both ends of the first main body portion 2361 along the first direction to form the opening 25, which can serve as the channel outlet 242 of the first sub-channel 2411 and the channel inlet 243 of the second sub-channel 2412, ensuring the smooth flow of the phase change medium 22 in the channel 24.

Furthermore, the two adjacent main supporting members 236 are respectively a third supporting member 2363 and a fourth supporting member 2364, the fourth supporting member 2364 is arranged to surround the outside of the third supporting member 2363. This allows the formation of a sub-channel 241 between the fourth supporting member 2364 and the third supporting member 2363, which can increase the flow path of the phase change medium 22. The opening 25 of the third supporting member 2363 is arranged opposite to the first main body portion 2361 of the fourth supporting member 2364. This arrangement ensures that when the phase change medium 22 flows out from the opening 25 of the third supporting member 2363, it flows towards the first main body portion 2361 of the fourth supporting member 2364 due to inertia. This increases the flow resistance of the phase change medium 22 within the channel 24, thereby enhancing the utilization rate of the phase change medium 22.

Furthermore, as shown in FIG. 6, the supporting member 23 further includes a secondary supporting member 237, the secondary supporting member 237 includes a second main body portion 2371 and a second extension portion 2372, the secondary supporting member 237 is arranged at the opening 25 of the main supporting member 236 on the innermost ring and extends in the first direction. This not only guides the phase change medium 22 near the main supporting member 236 on the innermost ring, but also further increases the flow resistance of the phase change medium 22 within the heat dissipation assembly 20, thereby slowing down the flow rate at which the phase change medium 22 is fully utilized.

Furthermore, the secondary supporting member 237 can divide the opening 25 of the main supporting member 236 on the innermost ring into a plurality of sub-openings 251, serving as a channel outlet 242 of the sub-channel 241.This allows the phase change medium 22 between the secondary supporting member 237 and main supporting member 236 on the innermost ring to flow out through the plurality of sub-openings 251, facilitating heat transfer within the heat dissipation assembly 20.

Furthermore, the second extension portion 2372 is one and is arranged at the middle of the second main body portion 2371 along the first direction. This design allows the phase change medium 22 between the main supporting member 236 on the innermost ring and the second main body portion 2371 to be divided into two parts. When the phase change medium 22 absorbs heat and expands, it not only increases the flow resistance of the phase change medium 22 between the main supporting member 236 on the innermost ring and the second main body portion 2371, but also enables the two parts of the phase change medium 22 to flow relatively in the first direction. This improves the heat uniformity throughout the interior of the heat dissipation assembly 20, delays the phase change time of the phase change medium 22, and slows down the flow rate of the phase change medium 22 in the channel 24. Consequently, the unvaporized liquid-phase phase change medium 22 can absorb more heat, thereby enhancing the utilization rate of the phase change medium 22.

As shown in FIGs. 3 to 6, the outer package 21 includes a first package layer 212 and a second package layer 213, the first package layer 212 and the second package layer 213 are respectively arranged on both sides of the phase change medium 22 along a third direction, the first package layer 212 and the second package layer 213 are respectively configured to be in contact with two adjacent cells 10 in the battery pack 100. Specifically, the outer package 21 is configured to consist of a first package layer 212 and a second package layer 213, which facilitates the arrangement of the phase change medium 22 within the outer package 21, thereby enhancing the production convenience of the heat dissipation assembly 20. The first package layer 212 and the second package layer 213 are respectively arranged on both sides of the phase change medium 22 in the third direction, preventing the phase change medium 22 from flowing out from both sides of the heat dissipation assembly 20 in the third direction. This ensures the reliability of the arrangement of the phase change medium 22 within the heat dissipation assembly 20.

Furthermore, the heat dissipation assembly 20 is arranged between two adjacent battery cells 10 in the battery pack 100. The first package layer 212 and the second package layer 213 are respectively configured to be in contact with the two battery cells 10. The heat generated by the two adjacent battery cells 10 can be transferred to the phase change medium 22 inside the same outer package 21 through the first package layer 212 and the second package layer 213. This not only reduces the volume of the phase change medium 22, but also helps to improve the heat absorption capacity of the phase change medium 22, thereby enhancing the utilization rate of the phase change medium 22.

Furthermore, both sides of supporting member 23 along a third direction are respectively connected to the first package layer 212 and the second package layer 213. This allows the supporting member 23 to simultaneously support both the first package layer 212 and the second package layer 213. Moreover, through the channels 24 defined by the supporting member 23, the first package layer 212 and the second package layer 213, respectively, the reliability of the flow of the phase change medium 22 within the channel 24 can be ensured. The third direction is the thickness direction of the heat dissipation assembly 20.

In the embodiments of the present application, after the phase change medium 22 is arranged between the first package layer 212 and the second package layer 213, thermal compression is performed on the peripheral edges of the first package layer 212 and the second package layer 213, as well as on both sides of the first package layer 212 and the supporting member 23 along the third direction, and on both sides of the second package layer 213 and the supporting member 23 along the third direction, so that the peripheral edges of the first package layer 212 and the second package layer 213 are connected, and both the first package layer 212 and the second package layer 213 are connected to both ends of the supporting member 23 along the third direction. This not only enables the rapid molding of the heat dissipation assembly 20, but also facilitates the rapid formation of the channel 24 in the heat dissipation assembly 20, thereby simplifying the production steps of the heat dissipation assembly 20 and enhancing the production convenience of the heat dissipation assembly 20. The materials of the first package layer 212 and the second package layer 213 include, but are not limited to, polyimide and polyethylene terephthalate.

In the embodiments of the present application, the phase change medium 22 can be coated onto one of the first package layer 212 and the second package layer 213 through a slot coating process. After sequentially placing a plurality of supporting members 23 into the phase change medium 22, the other of the first package layer 212 and the second package layer 213 is covered on the phase change medium 22, and the first package layer 212 and the second package layer 213 are made to correspond to each other. Then, by thermally compressing the peripheral edges of the first package layer 212 and the second package layer 213 as well as the heat dissipation area 222, the supporting members 23 are connected to the outer package 21 to form a channel 24, thereby enhancing the production convenience of the heat dissipation assembly 20.

According to the embodiments of the present application, the dimensions of the first package layer 212 and the second package layer 213 in the third direction are D1, and the dimension of the supporting member 23 in the third direction is D2. D1 and D2 satisfy the relationship equation: 0.1mm≤D1≤0.15mm, 1mm≤D2≤1.5mm. Specifically, if the dimensions of the first package layer 212 and the second package layer 213 in the third direction are set to be less than 0.1mm, the thickness of the outer package 21 is too small, which is prone to breakage, causing the phase change medium 22 to easily flow out of the outer package 21, resulting in waste; if the dimensions of the first package layer 212 and the second package layer 213 in the third direction are set to be greater than 0.15mm, the thickness of the outer package 21 is too large, reducing the capacity within the outer package 21 and consequently decreasing the volume of the phase change medium 22 in the heat dissipation assembly 20, affecting the heat dissipation capability of the heat dissipation assembly 20; if the dimensions of the first package layer 212 and the second package layer 213 in the third direction are set to be between 0.1mm and 0.15mm, it can not only ensure the structural strength of the outer package 21, but also enhance the heat absorption capability of the phase change medium 22, improving the heat dissipation effect of the heat dissipation assembly 20 and further ensuring the charging safety of the battery pack 100.

Furthermore, if the dimension of the supporting member 23 in the third direction is set to be less than 1mm, the cross-sectional width of the supporting member 23 is too small, resulting in weaker structural strength of the supporting member 23. When the battery cell 10 expands out of control, the supporting member 23 is prone to deformation. If the dimension of the supporting member 23 in the third direction is set to be greater than 1.5mm, the cross-sectional width of the supporting member 23 is too large, leading to a reduction in the amount of phase change medium 22 and affecting the heat absorption capacity of the heat dissipation assembly 20. If the dimension of the supporting member 23 in the third direction is set to be between 1mm and 1.5mm, it can not only ensure the structural strength of the supporting member 23, but also increase the heat absorption capacity of the phase change medium 22, enhance the heat dissipation effect of the heat dissipation assembly 20, and further ensure the charging safety of the battery pack 100.

As shown in FIGs. 2 to 3, the peripheral edge of the outer package 21 is at least partially formed with a package area 214, and the package area 214 is at least partially thinned to form the outlet 211. Specifically, the peripheral edges of the first package layer 212 and the second package layer 213 are thermally pressed to form a package area 214. The package area 214 has a certain thickness, which ensures the connection reliability between the first package layer 212 and the second package layer 213, as well as the structural reliability of the outer package 21. At least part of the package area 214 is thinned to form the outlet 211 of the heat dissipation assembly 20.

With such an arrangement, on the one hand, when the battery cell 10 is cooled or generates low heat, the structural integrity of the heat dissipation assembly 20 can be ensured, preventing the phase change medium 22 from leaking out of the outer package 21, which would result in waste of the phase change material. On the other hand, when the battery cell 10 generates a large amount of heat, the phase change medium 22 absorbs heat and expands. When the pressure in the heat dissipation assembly 20 exceeds the maximum stress that can be withstood at the outlet 211 of the package area 214, the phase change medium 22 can quickly break through the outlet 211 and flow out of the outer package 21, allowing the heat dissipation assembly 20 to quickly relieve pressure. This not only ensures the normal operation of the heat dissipation assembly 20, but also enables the phase change medium 22 to fully absorb heat in the heat dissipation assembly 20, improving the utilization rate of the phase change medium 22. In the embodiments of this application, the outlet 211 can be formed by reducing the length of the packaging area 214 along the second direction or by lowering the hot pressing temperature of the peripheral edges of the first package layer 212 and the second package layer 213.

As shown in FIG. 2, an exhaust channel 30 is arranged between the two adjacent battery cells 10, the outlet 211 is disposed on at least one side of the outer package 21 along a first direction, the exhaust channel 30 is disposed outside the heat dissipation assembly 20 corresponding to one side of the outlet 211 and is in communication with the outlet 211. With such an arrangement, the connectivity between the outlet 211 and the exhaust channel 30 can be ensured, allowing the phase change medium 22 to flow directly to the exhaust channel 30 after exiting the outer package 21 through the outlet 211. Under the guidance of the exhaust channel 30, the phase change medium 22 can smoothly flow out of the thermal runaway location of the battery cell 10, preventing the phase change medium 22 from flowing into other battery cells 10 within the battery pack 100, thereby ensuring the operational reliability of the other battery cells 10 in the battery pack 100.

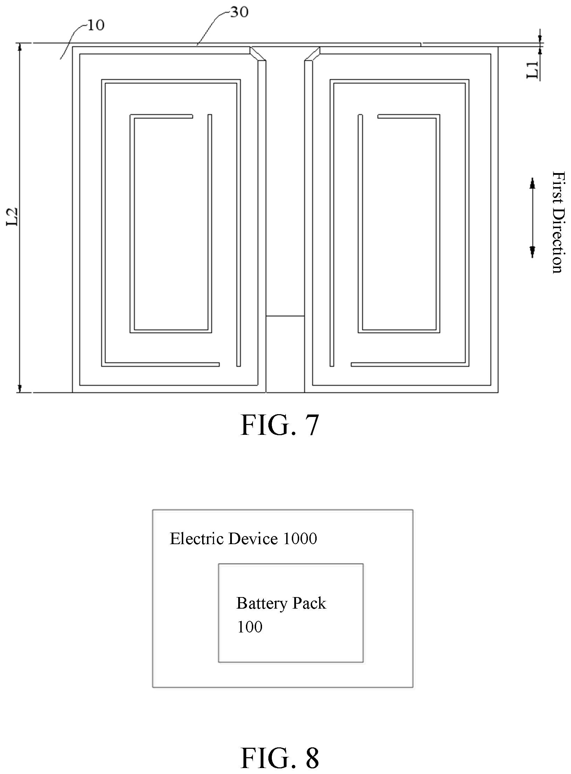

As shown in FIG. 7, the length of the heat dissipation assembly 20 in a first direction is less than the length of the battery cell 10 in a first direction. With such an arrangement, the first package layer 212 and the second package layer 213 on the heat dissipation assembly 20 can be fully utilized for being in contact with the two adjacent cells 10 in the battery pack 100. This enables all the phase change media 22 within the package assembly to absorb the heat generated by the battery cells 10, thereby facilitating the improvement of the utilization rate of the phase change medium 22.

Furthermore, the length of the exhaust channel 30 in a first direction is L1, and the length of the battery cell 10 in a first direction is L2, L1 and L2 satisfy the relationship equation: 1/100L2≤L1≤3/100L2, 1mm≤L1≤3mm. Specifically, the ratio of the length of the exhaust channel 30 in the first direction to the length of the battery cell 10 in the first direction is set between 1/100 and 3/100. In the embodiment of the present application, the length of the exhaust channel 30 in the first direction is between 1mm and 3mm. If the length of the exhaust channel 30 in the first direction is less than 1mm, the width of the exhaust channel 30 is too narrow, resulting in high exhaust resistance. This makes it impossible for the exhaust channel 30 to quickly release pressure after the phase change medium 22 breaks through the outlet 211, affecting the timeliness of pressure relief in the heat dissipation assembly 20.

Furthermore, if the length of the exhaust channel 30 arranged in the first direction is greater than 3mm, the width of the exhaust channel 30 is too wide, resulting in a reduction in the internal capacity of the outer package 21, which in turn reduces the volume of the phase change medium 22 in the heat dissipation assembly 20, affecting the heat dissipation and cooling effect of the heat dissipation assembly 20 on the battery cell 10. When the length of the exhaust channel 30 arranged in the first direction is between 1mm and 3mm, it can ensure smooth pressure relief in the exhaust channel 30 while maintaining the amount of phase change medium 22 in the heat dissipation assembly 20, thereby further improving the heat dissipation effect of the heat dissipation assembly 20 and enhancing the safety during charging of the battery pack 100.

According to the battery pack 100 of the present application, it includes the heat dissipation assembly 20 described in the present application. In some embodiments of the present application, as shown in FIG. 1, a plurality of the battery cells 10 is arranged to extend in a second direction and spaced apart in a third direction, and the heat dissipation assembly 20 is arranged between the two adjacent battery cells 10 along a third direction, the plurality of heat dissipation assemblies 20 between the two adjacent battery cells 10 are arranged in the second direction. Specifically, the battery cell 10 can also extend in the second direction and be spaced apart in the third direction within the battery pack 100. This allows both sides of the heat dissipation assembly 20 along the third direction to be in contact with the two adjacent battery cells 10 along the third direction, thereby enhancing the space utilization rate of the battery pack 100. A plurality of heat dissipation assemblies 20 are arranged between the two adjacent battery cells 10, and the plurality of heat dissipation assemblies 20 between the two adjacent battery cells 10 are arranged in the second direction. This increases the contact area between the heat dissipation assemblies 20 and the battery cells 10, ensuring that heat from various parts of the battery cell 10 along the second direction can be quickly and directly transferred to the heat dissipation assembly 20. Consequently, this enhances the heat dissipation and cooling rate of the heat dissipation assembly 20 for the battery cell 10, improving the reliability of heat dissipation for the battery cell 10 by the heat dissipation assembly 20.

In other embodiments of the present application, the plurality of heat dissipation assemblies 20 between the two adjacent battery cells 10 along a third direction are arranged in the first direction. This keeps the heat dissipation assembly 20 in contact with the battery cell 10 when the battery cells 10 are arranged along the first direction, ensuring the reliability of heat dissipation from the heat dissipation assembly 20 to the battery cells 10.

In another embodiment of the present application, a plurality of heat dissipation assemblies 20 between the two adjacent battery cells 10 along the third direction can be arranged in the first and second directions. This allows the plurality of heat dissipation assemblies 20 to be in contact with the plurality of battery cells 10 when a plurality of battery cells 10 are arranged in the battery pack 100, thereby ensuring the heat dissipation effect of the battery pack 100. In the embodiment of the present application, the first direction and the second direction are perpendicular to each other, which ensures that both sides of the heat dissipation assembly 20 along the third direction are in contact with the two adjacent battery cells 10, thereby improving the heat absorption efficiency of the phase change medium 22 in the heat dissipation assembly 20 and facilitating the utilization of the phase change medium 22.

In the embodiments of the present application, as shown in FIG. 1, the shape of the battery cell 10 may be of a type including, but not limited to, an elongated blade type or another square type whose length and width dimensions are approximately equal. This allows a plurality of heat dissipation assemblies 20 to be arranged between the two adjacent battery cells 10 according to the specific structure of the battery cell 10, ensuring the operational safety of the battery pack 100 while improving the compatibility between the heat dissipation assembly 20 and the battery cell 10. Consequently, a secure attachment between the heat dissipation assembly 20 and the battery cell 10 is ensured, enhancing the heat absorption efficiency of the phase change medium 22 in the heat dissipation assembly 20, and facilitating the utilization of the phase change medium 22.

According to some embodiments of the present application, when a plurality of heat dissipation assemblies 20 are arranged between the battery cells 10 along the first and second directions, the outlets 211 of the heat dissipation assemblies 20 in the same direction can be arranged in the same direction, which facilitates the arrangement of the heat dissipation assemblies 20 in the battery pack 100 and simplifies the assembly of the battery pack 100. According to other embodiments of the present application, when a plurality of heat dissipation assemblies 20 are arranged between the battery cells 10 along the first and second directions, the outlets 211 on the two adjacent heat dissipation assemblies 20 can be arranged opposite each other, which enlarges the space for the exhaust channels 30 on the heat dissipation assemblies 20, improves the pressure relief efficiency of the heat dissipation assemblies 20, and thus achieves rapid heat dissipation for the battery cells 10.

According to the embodiments of the present application, at least one battery cell 10 is disposed between the two adjacent heat dissipation assemblies 20. With such an arrangement, a plurality of battery cells 10 can be arranged between the two adjacent heat dissipation assemblies 20, which can improve the utilization rate of the phase change medium 22. While ensuring the operational safety of the battery pack 100, it can increase the number of battery cells 10 in the battery pack 100, thereby increasing the battery capacity of the battery pack 100, which is beneficial for enhancing the endurance of the product.

According to the embodiments of the present application, the battery pack 100 can be applied to the electric device 1000, as shown in FIG. 8. In this application, the heat dissipation assembly 20 of the battery pack 100 has high heat absorption efficiency, and the utilization rate of the phase change medium 22 is high.

In the description of this application, it is important to understand that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "peripheral", "radial", and "peripheral" indicate orientations or positional relationships based on those shown in the accompanying drawings. These terms are used solely for the convenience of describing this application and simplifying the description, and do not indicate or imply that the devices or components referred to must have specific orientations, be constructed, or operate in a specific orientation. Therefore, they will not be construed as limitations on this application.

In the description of this specification, references to terms such as "an embodiment", "some embodiments", "exemplary embodiments", "examples", "specific examples", or "some examples" indicate that the specific features, structures, materials, or characteristics described in conjunction with the embodiment or example are included in at least one embodiment or example of the present application. In this specification, illustrative expressions of the aforementioned terms do not necessarily refer to the same embodiment or example.

Although the embodiments of the present application have been shown and described, person having ordinary skill in the art will understand that various changes, modifications, substitutions, and variations can be made to these embodiments without departing from the principles and purposes of the present application. The scope of the present application is defined by the claims and their equivalents.

## Claims

1. A heat dissipation assembly (20), comprising:
an outer package (21), the outer package (21) being suitable for being in contact with two adjacent battery cells (10) in a battery pack (100);
a phase change medium (22); and
a supporting member (23), the supporting member (23) being arranged in the outer package (21) and defining a channel (24) together with the outer package (21), the phase change medium (22) being disposed in the channel (24), an outlet (211) being arranged on the outer package (21), and the outlet (211) being in communication with the channel (24).

2. The heat dissipation assembly (20) according to claim 1, wherein the channel (24) comprises a plurality of sub-channels (241), and a channel outlet (242) of one of two adjacent sub-channels (241) is in communication with a channel inlet (243) of the other.

3. The heat dissipation assembly (20) according to claim 2, wherein one of the sub-channel (241) of the two adjacent sub-channels (241) is arranged to surround the outer periphery of the other sub-channel (241).

4. The heat dissipation assembly (20) according to any one of claims 1 to 3, wherein the supporting members (23) are provided in plurality, each of the supporting members (23) is a frame-shaped member, and the plurality of supporting members (23) are arranged in a surrounding configuration in sequence.

5. The heat dissipation assembly (20) according to claim 4, wherein the two adjacent supporting members (23) are respectively a first supporting member (232) and a second supporting member (233), a first notch (2311) is provided on the first supporting member (232), a second notch (2312) is provided on the second supporting member (233), the first notch (2311) is disposed on one side of the first supporting member (232) along a first direction, the second notch (2312) is disposed on a side of the second supporting member (233) away from the first notch (2311) along the first direction, and the notch of the supporting member (23) on an outermost ring is disposed on a side of the supporting member (23) away from the outlet (211) along the first direction, the first direction is the length or width direction of the heat dissipation assembly (20).

6. The heat dissipation assembly (20) according to any one of claims 1 to 3, wherein the supporting member (23) is in a continuous spiral shape.

7. The heat dissipation assembly (20) according to claim 1 or 2, wherein the supporting member (23) comprises a plurality of plate segments (235) spaced apart from each other in a first direction, the plurality of plate segments (235) extend in a second direction, and the two adjacent plate segments (235) are respectively a first plate segment (2351) and a second plate segment (2352), an orthographic projection of the first plate segment (2351) in the first direction partially overlaps or does not overlap with an orthographic projection of the second plate segment (2352) in the first direction, wherein the first direction is the length direction of the heat dissipation assembly (20), and the second direction is the width direction of the heat dissipation assembly (20), or the first direction is the width direction of the heat dissipation assembly (20), and the second direction is the length direction of the heat dissipation assembly (20).

8. The heat dissipation assembly (20) according to claim 2 or 3, wherein the two adjacent sub-channels (241) are respectively a first sub-channel (2411) and a second sub-channel (2412), the first sub-channel (2411) has a plurality of channel outlets (242), and the second sub-channel (2412) has a plurality of channel inlets (243), the plurality of channel outlets (242) of the first sub-channel (2411) and the plurality of channel inlets (243) of the second sub-channel (2412) correspond one-to-one and communicate with each other.

9. The heat dissipation assembly (20) according to claim 8, wherein the supporting member (23) comprises:
a plurality of main supporting members (236), the main supporting members (236) comprising a first main body portion (2361) and a first extension portion (2362), two first extension portions (2362) being respectively arranged at two ends of the first main body portion (2361) along an extension direction of the first main body portion (2361) to form an opening (25);
wherein the two adjacent main supporting members (236) are respectively a third supporting member (2363) and a fourth supporting member (2364), the fourth supporting member (2364) is arranged to surround the outside of the third supporting member (2363), and the opening (25) of the third supporting member (2363) is arranged opposite to the first main body portion (2361) of the fourth supporting member (2364).

10. The heat dissipation assembly (20) according to claim 9, wherein the supporting member (23) further comprises:
a secondary supporting member (237), the secondary supporting member (237) being disposed at the opening (25) of the main supporting member (236) on the innermost ring to divide the opening (25) into a plurality of sub-openings (251), the sub-opening (251) being the channel outlet (242) of the sub-channel (241).

11. The heat dissipation assembly (20) according to any one of claims 1 to 10, wherein the outer package (21) comprises a first package layer (212) and a second package layer (213), the first package layer (212) and the second package layer (213) are respectively arranged on both sides of the phase change medium (22) along a third direction, the first package layer (212) and the second package layer (213) are respectively configured to be in contact with two adjacent cells (10) in the battery pack (100), both sides of supporting member (23) along a third direction are respectively connected to the first package layer (212) and the second package layer (213), and the supporting member (23) respectively defines the channel (24) with the first package layer (212) and the second package layer (213), the third direction is the thickness direction of the heat dissipation assembly (20).

12. The heat dissipation assembly (20) according to any one of claims 1 to 11, wherein the peripheral edge of the outer package (21) is at least partially formed with a package area (214), and the package area (214) is at least partially thinned to form the outlet (211).

13. The heat dissipation assembly (20) according to any one of claims 1 to 12, wherein an exhaust channel (30) is arranged between the two adjacent battery cells (10), the outlet (211) is disposed on at least one side of the outer package (21) along a first direction, the exhaust channel (30) is disposed outside the heat dissipation assembly (20) corresponding to one side of the outlet (211) and is in communication with the outlet (211).

14. The heat dissipation assembly (20) according to claim 13, wherein the length of the heat dissipation assembly (20) in a first direction is less than or equal to the length of the battery cell (10) in a first direction, the length of the exhaust channel (30) in a first direction is L1, and the length of the battery cell (10) in a first direction is L2, L1 and L2 satisfy the relationship equation: 1/100L2≤L1≤3/100L2.

15. The heat dissipation assembly (20) according to claim 14, wherein L1 satisfies the relationship equation: 1mm≤L1≤3mm.

16. A battery pack (100), comprising:
the heat dissipation assembly (20) according to any one of claims 1 to 15; and
battery cells (10), the battery cells (10) being arranged to extend in a second direction and being in plurality, the plurality of battery cells (10) being spaced apart in a third direction, and the heat dissipation assembly (20) being arranged between the two adjacent battery cells (10) along a third direction.

17. The battery pack (100) according to claim 16, wherein
the battery pack (100) comprises the plurality of heat dissipation assemblies (20), and the plurality of heat dissipation assemblies (20) between the two adjacent battery cells (10) along a third direction are arranged in the second direction; and/or, the plurality of heat dissipation assemblies (20) between the two adjacent battery cells (10) along a third direction are arranged in the first direction, wherein the first direction and the second direction are perpendicular to each other.

18. The battery pack (100) according to claim 16 or 17, wherein at least one battery cell (10) is disposed between the two adjacent heat dissipation assemblies (20).

19. An electric device (1000), comprising: the battery pack (100) according to any one of claims 16 to 18.
